# EUROPÄISCHE PATENTSCHRIFT

(11) **EP 2 109 503 B1**
(45) Veröffentlichungstag und Bekanntmachung des Hinweises auf die Patenterteilung: **13.11.2019**
(21) Anmeldenummer: 07722292.5
(22) Anmeldetag: 25.04.2007
(51) Int. Cl.: B03B 5/36, B03B 5/40

(54) **VERFAHREN UND VORRICHTUNG ZUM AUSSONDERN VON MATERIALIEN SCHWERER ALS KUNSTSTOFF, INSBESONDERE METALLEN, DURCH FLOTATION IN EINEM WASSERBAD, BEI DER TRENNUNG VON KUNSTOSTOFFEN UNTERSCHIEDLICHER DICHTE**
METHOD OF, AND APPARATUS FOR, SEPARATING OUT MATERIALS HEAVIER THAN PLASTIC, IN PARTICULAR METALS, BY FLOTATION IN A WATER BATH, IN A SEPARATION OF PLASTICS OF DIFFERENT DENSITIES
PROCÉDÉ ET DISPOSITIF DE SÉPARATION DE MATÉRIAUX PLUS LOURDS QUE LES MATIÈRES SYNTHÉTIQUES, EN PARTICULIER DE MÉTAUX, PAR FLOTTATION DANS UN BAIN D'EAU, DANS LA SÉPARATION DE MATIÈRES SYNTHÉTIQUES DE DIFFÉRENTES DENSITÉS

(30) Priorität: 12.01.2007 DE 102007001809
(43) Veröffentlichungstag der Anmeldung: 21.10.2009
(73) Patentinhaber: KOSLOW, Alexander, 84036 Landshut (DE)
(72) Erfinder: KOSLOW, Alexander, 84036 Landshut (DE)
(86) Internationale Anmeldenummer: PCT/DE2007/000734
(87) Internationale Veröffentlichungsnummer: WO 2008/083640

(56) Entgegenhaltungen:
- DE-A1- 4 217 464
- DE-A1-102005 021 091
- DE-B- 1 102 661
- DE-C- 939 561
- GB-A- 1 562 266

## Beschreibung

Es sind heute Verfahren und Vorrichtungen bekannt, die Shredderfraktionen unterschiedlicher Stoffgemenge nach den verschiedenen Stoffen trennen, um diese einer Wiederverwertung zuzuführen. Bei Stoffgemengen, deren Kunststoffe unterschiedlicher chemischer Zusammensetzung und Dichte in einem Flotationsverfahren voneinander getrennt werden, setzen sich die schwereren Kunststoffe auf einem Siebboden im Flotationsbecken ab und werden von dort ausgetragen. Die Flotationsflüssigkeit ist meist reines Wasser. Um in reinem Wasser als Flotationsflüssigkeit eine saubere Trennung von Kunststoffen unterschiedlicher Dichte, bedingt durch unterschiedliche chemische Zusammensetzung, zu erzielen, ist unabdingbar, dass nicht erwünschte Flüssigkeitsbewegungen ausgeschaltet, zumindest jedoch auf ein Minimum beschränkt bleiben.

Mit den in einem Shredder aufbereiteten Kunststoffgemengen gelangen auch ferromagnetische und nichtmagnetischen Metallteile oder andere Materialien, die schwerer als Kunststoffe sind, in das Flotationsbecken und setzten sich, meist in Form von kleinen Haufen, auf einem Siebboden ab. Der leichtere Kunststoffanteil in einem solchen Gemenge benötigt für den Absetzvorgang mehr Zeit als die schwereren Materialien und kann daher im oberen Bereich eines Flotationsbeckens zusammen mit Flotationsflüssigkeit abgezogen werden. Eine Trennung von Kunststoffen unterschiedlicher Dichte hat in dieser ersten Stufe meist noch nicht stattgefunden. In einer weiteren, nachgeschalteten 2. Stufe erfolgt die Trennung von Kunststoffen entsprechend ihrer Dichteunterschiede in bekannter Weise. Die Materialien, schwerer als Kunststoff, die sich auf dem Siebboden der ersten Stufe absetzen, führen zu dem Problem des Verstopfens der Durchlassöffungen für Flotationsflüssigkeit im Siebboden. Der Wirkungsgrad bei der Trennung der unterschiedlichen Materialien des Stoffgemenges in der ersten Stufe wird dadurch nicht unwesentlich nachteilig beeinflusst

DE 10 2005 021091 beschreibt ein Verfahren und eine Vorrichtung zum Trennen von Kunststoffen unterschiedlicher Zusammensetzung. Die Trennung erfolgt entsprechend der unterschiedlichen Dichte der Kunststoffe in einem Flotationsverfahren.

DE 11 02 661 B beschreibt einen Nassklassierer mit einer linearen Hin- und Herbewegung des Klassierbodens.

Es ist Aufgabe der Erfindung ein verbessertes Trennverfahren und eine verbesserte Trennvorrichtung anzugeben, bei denen sich auf dem Siebboden ablagernde Materialhaufen während des Betriebs entfernt werden sollen, ohne den Trennvorgang der Kunststoffpartikel vom Metall oder anderen schwereren Materialien nachteilig zu beeinflussen. Ein Abkratzen oder Abspülen scheidet aus, da dadurch unerwünschte Bewegung in das Flotationsbecken eingeleitet würde und hierdurch der Trennvorgang von Kunststoffen unterschiedlicher Dichte von den anderen Restmaterialien negativ beeinträchtigt würde.

Diese Aufgabe wird durch die in den unabhängigen Ansprüchen definierte Erfindung gelöst; Ausgestaltungen der Erfindung sind in den anhängigen Ansprüchen definiert.

Erfindungsgemäß ist der Siebboden der ersten Stufe, die der Aussonderung von Stoffen schwerer als Kunststoff dient, horizontal im Flotationsbecken verschiebbar so gelagert, dass zwischen Siebodenbegrenzung und Wandung des Flotationsbeckens ein Spalt während der Horizontalbewegung des Siebbodens verbleibt. Der Siebboden ist mit einem Antrieb ausgestattet, der z. B. hydraulischer, magnetischer, mechanischer oder elektrischer Art sein kann, mittels dessen die Horizontalbewegung des Siebbodens durchgeführt wird.

Hierzu ist mindestens eine Führungsschiene vorgesehen, auf der Rollen gleiten, mit denen der Siebboden direkt oder über Tragarme verbunden ist. Um die Bewegung in der Flotationsflüssigkeit durch Verschieben des Siebbodens zu minimieren, können die Tragarme ein Wirbel vermeidendes Strömungsprofil aufweisen. Ein Steuergerät wirkt mit dem Antrieb in der Weise zusammen, dass sich der Siebboden in Richtung einer Verkleinerung des Spalts langsam bewegt und nach Erreichen der Endstellung in dieser Richtung ruckartig in der anderen Richtung beschleunigt und beim Erreichen der anderen Endstellung schlagartig angehalten wird. Dieser Bewegungsvorgang wird in Intervallen wiederholt und bewirkt, dass immer wieder auf eine schnelle, plötzliche Beschleunigung eine abrupte Verzögerung bis zum Stillstand des Siebbodens folgt, so dass die Metallhaufen infolge der Massenträgheitskräfte und der eingeleiteten kinetischen Energie sich auf dem Siebboden in Richtung des Spalts bewegen, bis sie letztlich durch den Spalt in ein Auffangbecken fallen, aus dem sie über eine Schleuse abgeführt werden können.

Dieser Vorgang ähnelt einem Verfahren, bei dem der Siebboden plötzlich unter den Metallhaufen weggezogen würde. Die Massenträgheit der Metallhaufen wird genutzt, um sie auf dem Siebboden in Richtung Spalt und Auffangbecken zu bewegen. Dieser Vorgang wird in Intervallen wiederholt, sodass schließlich sämtliche, sich bildenden Metallhaufen durch den Spalt zwischen einer Begrenzung des Siebbodens und der zugeordneten Beckenwandung in das Auffangbecken fallen. Aus diesem Auffangbecken wird das Metall vom Siebboden entfernt und kann zur weiteren Verwertung abgeführt werden.

### Figurenbeschreibung

**Figur 1**
   Die Erfindung befasst sich mit der Entfernung von Metallablagerungen auf einem Siebboden (1) bei einer Flotationseinrichtung zum Trennen von Kunststoffen unterschiedlicher Dichte von Materialien, die schwerer als Kunststoff sind.. Hierbei soll speziell die Funktionsfähigkeit des Siebbodens (1) in einem Flotationsbecken (27) erhalten werden für die Trennung von Kunststoffen unterschiedlicher chemischer Zusammensetzung mittels eines Flotationsverfahrens und deren Trennung von Materialien schwerer als Kunststoffe.
   Bei der Trennung eines solchen Gemenges von unterschiedlichen Stoffen, wie Kunststoffen, ferritischen und nicht ferritischen Metallen, sowie Gesteinen, die meist mittels eines Shredders einer ersten groben Aufbereitung unterzogen werden, d. h. in etwa gleich große Einzelstücke zerkleinert werden, wird ein Flotationsverfahren eingesetzt, das in mehreren Stufen arbeitet.
   In einer ersten Stufe lagern sich die im Stoffgemenge mitgeführten schweren Metallanteile in Form von Haufen (8) auf dem Siebboden (1) ab und die leichteren Kunststoffanteile verharren im ersten Flotationsbecken noch im Schwebezustand und können dadurch leicht in eine zweite Stufe in ein weiteres Flotationsbecken zur Trennung von Kunststoffen unterschiedlicher Dichte, übergeleitet werden.
   Die auf dem Siebboden (1) der ersten Stufe sich absetzenden Metallhaufen (8) sind von dort nur schwer zu entfernen. Ein Abkratzen oder Wegspülen mit einem starken Flüssigkeitsstrahl scheiden aus, da dadurch in die Flotationsflüssigkeit eine nicht erwünschte Bewegung eingebracht würde, die den Trennvorgang von Kunststoffen und Metallteilen stören, wenn **nicht vollständig verhindern würde, da eine neuerliche Durchmischung von Kunststoffteilen** und Metallanteilen nicht unterbunden werden könnte. Aus diesem Grunde belässt die Erfindung zwischen einer Rückwand (26) des Flotationsbeckens (27) und einer rückwärtigen Breitseite (25) des Siebbodens (1) einen Spalt (7) der Breite S, wenn der Siebboden (1) in der einen Endlage an der Vorderwand (28) des Flotationsbeckens (27) mit seiner vorderen Breitseite (29) anliegt.
   Der Siebboden (1) ist in Längsrichtung (Pfeilrichtung) verschiebbar auf Rollen- oder Gleitlagern (2) in einer Führungsschiene (3) gelagert Ein Actuator, z. B. Hydraulikmotor (6), greift über ein mit dem Siebboden (1) zusammenwirkendes, von einem Hebel (4) und einer Kolbenstange (5) gebildetes Gestänge an dem Siebboden (1) an und führt, gesteuert von einer Steuereinrichtung (14) (Control-unit), eine Längsbewegung des Siebbodens (1) durch. Der Hydraulikmotor (6) (Actuator) ist über eine Hochdruckleitung (19) mit einem Tank (17), der Hydraulikflüssigkeit beinhaltet, verbunden, aus dem eine Hydraulikpumpe (18) über die Saugleitung (21) Hydraulikflüssigkeit in die Hochdruckleitung (19) zum Hydraulikmotor (6) befördert.
   Der Druck in der Hochdruckleitung (19) wird mittels eines Überdruckventils (16) konstant gehalten, da dieses Überdruckventil (16) überschüssig geförderte Hydraulikflüssigkeit über eine Rückströmleitung (20) in den Tank (17) zurückströmen lässt. In die Hydraulikhochdruckleitung (19) sind vor dem Hydraulikmotor (6) Steuerventile (13) eingebaut, die von der Steuereinrichtung (14) über einen Servomotor (15) so betätigt werden, dass diese wechselweise jeweils eine von zwei Druckkammern A, B (23;24) des Hydraulikmotors (6) mit der Hochdruckleitung (19) verbinden. Die Druckkammern (23; 24) werden in einem Zylinder (30) durch einen frei beweglichen Kolben (22) gebildet, der fest mit der Kolbenstange (5) verbunden ist Gleichzeitig wird die von der Hochdruckleitung (19) getrennte Druckkammer A über die Rückströmleitung (20) mit dem Tank (17) verbunden, sodass aus der nicht mit der Hochdruckleitung (19) verbundenen Druckkammer A, zu deren Entlastung, Hydraulikflüssigkeit abfließen kann. Gleichzeit wirkt in der Druckkammer B die Hydraulikflüssigkeit, infolge des geöffneten Steuerventils (13). Die beiden Druckkammern A und B sind durch einen Kolben K (22), der in einem Zylinder (30) flüssigkeitsdicht gleitend gelagert ist, voneinander getrennt. Der Kolben K (22) wirkt mit dem Gestänge (4,5) form- oder kraftschlüssig zusammen und bewegt den Siebboden (1).
   Die Steuereinrichtung (14) beeinflusst den Hydraulikmotor dergestalt, dass zunächst eine langsame Bewegung des Siebbodens (1) in Richtung einer Verkleinerung des Spalts (7) erfolgt und dann mit großer Beschleunigung der Siebboden (1) in die Gegenrichtung gleichsam katapultiert wird, sodass sich der vorher verschlossene Spalt (7) wieder öffnet Beim Erreichen der anderen Endlage (maximale Spaltöffnung) wird der Siebboden (1) abrupt auf Null abgebremst Die in den Metallhaufen (8) durch die schnelle Bewegung eingebrachte kinetische Energie wirkt beim plötzlichen Abbruch dieser Bewegung fort und die Metallhaufen (8) gleiten infolge der Massenträgheitskräfte und der gespeicherten kinetischen Energie über den Siebboden (1) solange, bis diese Energie verbraucht ist oder bis die Metallhaufen (8) über die Breitseite (25) in den Spalt (7) und von dort in ein Auffangbecken (31) fallen. Dieser Vorgang wird in Intervallen fortlaufend wiederholt. Die Metallteile werden zur weiteren Verwertung über eine Schleuse (12) abgeführt.
   Der Siebboden (1') in der zweiten Stufe und die mit diesem verbundene Aufhängung (Führungsschiene 3') können um eine horizontale Achse eines Drehgelenks (9) schwenkbar gelagert sein, um hierdurch, durch Schrägstellung des Siebbodens (1'), die Dicke D der Sedimentschicht aus sich ablagernden Kunststoffpartikel (10) zusätzlich zu verstellbaren Klappen (32) zu beeinflussen. Die Dicke der Sedimentschicht soll in etwa gleich über die gesamte Siebfläche sein. Messsensoren (11), verteilt über die gesamte Siebbodenfläche (1') geben Steuerkommandos an eine zugehörige, die Schräge des Siebbodens (1') beeinflussende Steuereinrichtung.
**Figur 2**

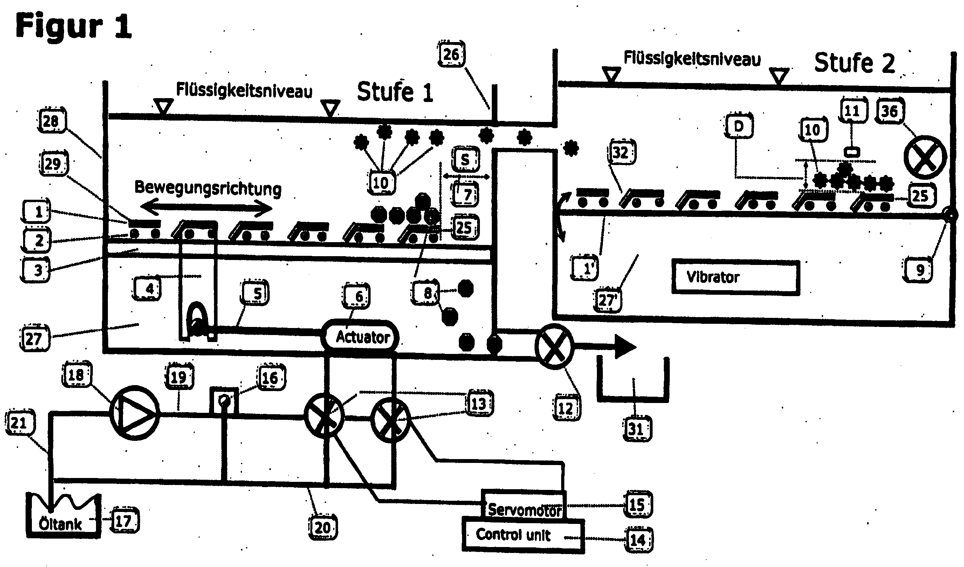

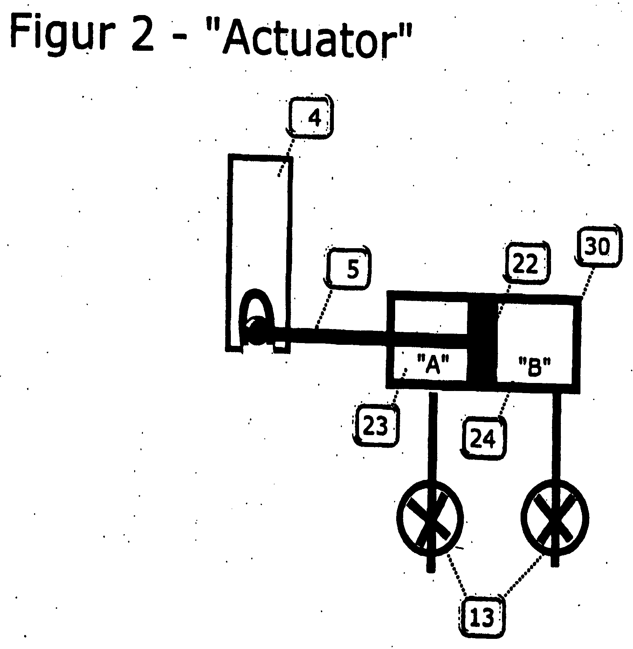

   In Figur 2 ist ein Hydraulikmotor (6) beispielsweise dargestellt, der von einem in einem Zylinder (30) gleitenden Kolben (22) gebildet ist, der in dem Zylinder (30) zwei Druckkammern A, B (23; 24) voneinander trennt, die ihrerseits mit einer Hochdruckleitung (19) über Steuerventile (13) wechselweise verbindbar sind. Der Kolben (22) ist mit mindestens einer Kolbenstange (5) fest verbunden, die mit einem Hebel (4) zusammenwirkt, der am Siebboden (1) angreift und diesen in der gewünschten, vorstehend beschriebenen Weise bewegt. Von den beiden Druckkammern (23; 24) ist jeweils eine mit der Hochdruckleitung (19) dann verbunden, wenn die andere über das Steuerventil (13) gerade auf Entlastung geschaltet mit einer Rückströmleitung (20) in Verbindung steht.
**Figur 3**

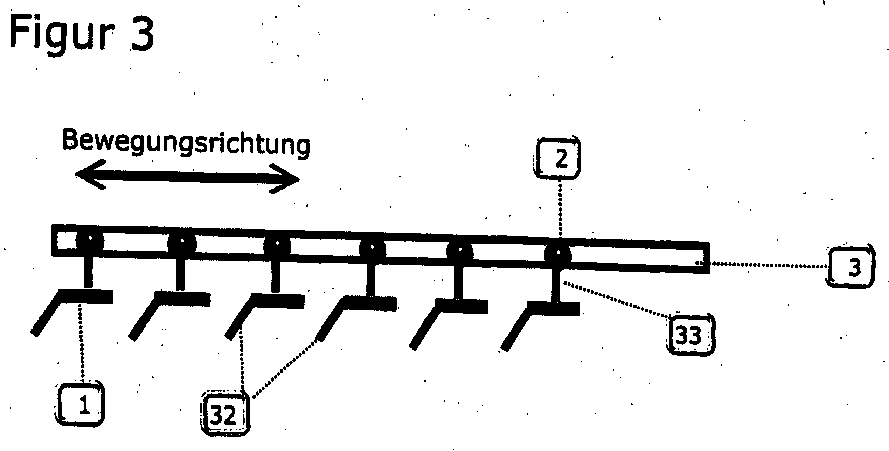

   In Figur 3 ist eine mögliche Aufhängung und Lagerung des verschiebbaren Siebbodens (1) dargestellt. Hierbei hängt der Siebboden (1) an einer Führungsschiene (3) über Rollen (2), die ihrerseits über Tragarme (33) mit dem Siebboden (1) zusammenwirken. In dieser Darstellung sind an der Unterseite des Siebbodens (1) die verstellbaren Klappen (32) erkennbar.
**Figur 4**

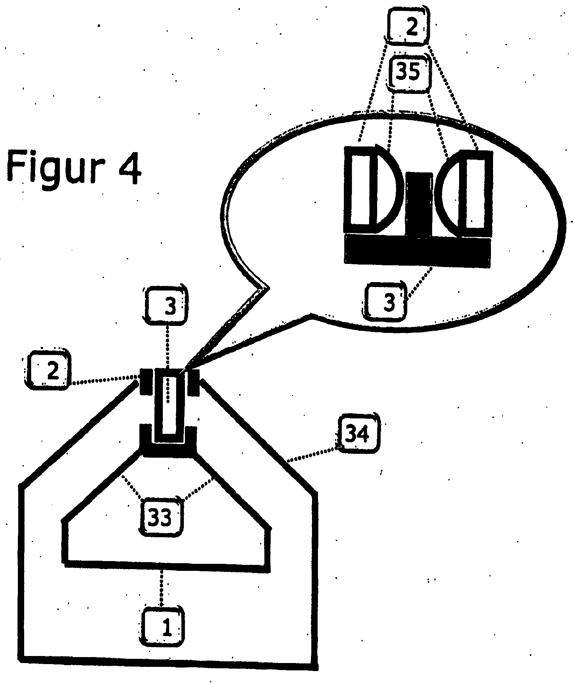

   In Figur 4 ist eine Aufhängung des Siebbodens (1) veranschaulicht, bei der die Rollen (2) auf einer Führungsschiene (3) laufen, die mittig über dem Flotationsbecken angeordnet ist und sich über Stützen (34) an der Wandung des Flotationsbeckens abstützt. Die Tragarme (33) für den beweglichen Siebboden (1) weisen eine entsprechende konstruktive Form auf. Die Rollen (2), die auf der Führungsschiene (3) laufen, weisen eine ballige Flanke (35) auf der der Führungsschiene (3) zugerichteten Seite auf, um Reibungsverluste an der Führungsschiene (3) beim Bewegen des Siebbodens (1) zu minimieren.

### Bezugszeichen

1 Siebboden 1. Stufe
1' Siebboden 2. Stufe
2 Rollen- oder Gleitlager
3 Führungsschiene
4 Hebel
5 Kolbenstange
6 Hydraulikmotor (Actuator)
7 Spalt
8 Metallhaufen
9 Drehgelenk
10 Kunststoffpartikel, Sediment
11 Messsensoren für Dicke (D) der abgelagerten Kunststoffpartikel
12 Austragschleuse für Metalle
13 Steuerventile (gegenläufig umschaltbar)
14 Steuereinrichtung (Control unit)
15 Servomotor
16 Überdruckventil
17 Tank für Hydraulikflüssigkeit
18 Hydraulikpumpe
19 Hochdruckleitung
20 Rückströmleitung
21 Ansaugleitung für Hydraulikflüssigkeit
22 Kolben
23 Druckkammer A
24 Druckkammer B
25 rückwärtige Breitseite des Siebbodens
26 Rückwand des Flotationsbeckens
27 Flotationsbecken 1. Stufe
27' Flotationsbecken 2. Stufe
28 Vorderwand des Flotationsbeckens29 vordere Breitseite des Siebbodens
30 Zylinder
31 Auffangbecken
32 Verstellbare Klappen am Siebboden
33 Tragarm
34 Stützen
35 ballige Rollenflanke
36 Austragschleuse für schweren Kunststoff

## Patentansprüche

1. Verfahren zum Trennen eines Gemenges aus Kunststoffen unterschiedlicher Dichte und Materialien schwerer als Kunststoffe durch Flotation im reinen Wasserbad eines Flotationsbeckens (27), mit den Schritten:
Trennen, in einer ersten Stufe, von Materialien schwerer als Kunststoff, die sich infolge ihres Gewichts auf einem Siebboden (1) absetzen, der horizontal verschiebbar im Flotationsbecken gelagert ist,
Überführen der noch im Schwebezustand befindlichen Kunststoffe in eine zweite Stufe, in der eine Trennung von Kunststoffen unterschiedlicher Dichte erfolgt,
**gekennzeichnet durch** ein
Bewegen des Siebbodens der ersten Stufe langsam in eine erste Endlage, um einen Spalt (7) zwischen dem Siebboden und einer Wand (26) des Flotationsbeckens (27) zu verkleinern und anschließendes Beschleunigen des Siebbodens in die andere Endlage und abruptes Anhalten bei Erreichen der anderen Endlage, und
Wiederholen der Bewegung des Siebbodens in Intervallen, um den Siebboden zu reinigen.

2. Vorrichtung zum Trennen eines Gemenges aus Kunststoffen unterschiedlicher Dichte und Materialien schwerer als Kunststoffe durch Flotation in reinen Wasserbädern, enthaltend:
ein erstes Flotationsbecken (27) mit einem Siebboden (1) zur Ablagerung von Materialien (8) schwerer als Kunststoff, wobei der Siebboden horizontal beweglich in Bezug auf eine Wand (26) des ersten Flotationsbeckens gelagert ist,
eine Servoeinrichtung zum Bewegen des Siebbodens
ein zweites Flotationsbecken (27') zur Trennung von Kunststoffen unterschiedlicher Dichte der aus dem ersten Flotationsbecken überführten, noch im Schwebezustand befindlichen Kunststoffe; und
eine mit der Servoeinrichtung verbundene Steuereinrichtung (14) zur Steuerung der Bewegung des Siebbodens so, dass der Siebboden langsam in Richtung einer ersten Endlage bewegt wird und dabei einen Spalt (7) zwischen dem Siebboden und einer Wand (26) des ersten Flotationsbeckens verkleinert, dass der Siebboden anschließend in Richtung der anderen Endlage beschleunigt und abrupt bei Erreichen der anderen Endlage abgebremst wird und dass die Bewegung des Siebbodens in Intervallen wiederholt wird, um den Siebboden zu reinigen.

3. Vorrichtung nach Patentanspruch 2, **dadurch gekennzeichnet, dass** der Siebboden (1) mit Rollen (2) zusammenwirkt, die auf mindestens einer Führungsschiene (3) gleiten, die sich an der Außenwandung des Flotationsbeckens abstützt, und die Rollen über Tragarme (33) am Siebboden (1) angreifen.

4. Vorrichtung nach Patentanspruch 3, **dadurch gekennzeichnet, dass** der Siebboden (1) an mindestens einer Laufkatze aufgehängt ist, die an der zentral über dem Siebboden (1) angeordneten Führungsschiene (3), die sich an den Wänden des Flotationsbeckens mittels Stützen.(34) abstützt, entlang gleitet.

5. Vorrichtung nach einem der Patentansprüche 3 oder 4, **dadurch gekennzeichnet, dass** die entlang der Führungsschiene (3) gleitende Flanke (35) der Rollen (2) zur Minimierung der Reibung an der Führungsschiene (3) ballig gewölbt ist.

6. Vorrichtung nach Patentanspruch 3 und 4, **dadurch gekennzeichnet, dass** die Tragarme (33), die am Siebboden (1) angreifen, ein strömungsgünstiges, gewölbtes Profil aufweisen.

7. Vorrichtung nach Patentanspruch 2 **gekennzeichnet durch** eine Austragsschleuse (12) zum Abführen der durch den Spalt (7) vom Siebboden (1) gefallenen und am Boden des ersten Flotationsbeckens (27) gesammelten Materialien in ein Auffangbecken (31).

8. Vorrichtung nach Patentanspruch 2, **dadurch gekennzeichnet, dass** die Steuereinrichtung auf einen Hydraulikmotor (6) einwirkt, der fest mit der Wandung des ersten Flotationsbeckens (27) verbunden ist und der in einem Zylinder (30) einen gleitend gelagerten Kolben (22) beinhaltet, der den Zylinder (30) in zwei Druckkammern (23;24) unterteilt, die wechselweise, gesteuert von der Steuereinrichtung (14) über Steuerventile (13), entweder mit einer von einer Hydraulikpumpe (18) gespeisten Hochdruckleitung (19) oder einer druckfreien Rückströmleitung (20) verbunden sind.

9. Vorrichtung nach Patentanspruch 8, **dadurch gekennzeichnet, dass** die Steuereinrichtung (14) über einen Servomotor (15) auf die Steuerventile (13) einwirkt.

10. Vorrichtung nach Patentanspruch 8, **dadurch gekennzeichnet, dass** in die Hochdruckleitung (19) zur Druckregulierung ein Überdruckventil (16) eingebaut ist, das den Höchstdruck in der Überdruckleitung (19) begrenzt und einen Rückfluss zum Hydrauliktank (17) über die Rückströmleitung (20) beim Erreichen des Höchstdrucks herstellt.

11. Vorrichtung nach Patentanspruch 8, **dadurch gekennzeichnet, dass** eine ruckartige Bewegung des Siebbodens (1) durch plötzliches, schlagartiges Umsteuern der beiden Druckkammern (23; 24) von Last auf Entlastung durch Verbinden der vorher drucklosen Druckkammer mit der Hochdruckleitung (19) und Verbinden der druckbeaufschlagten Druckkammer mit der Rückströmleitung (20) erfolgt.

12. Vorrichtung nach Patentanspruch 2, **dadurch gekennzeichnet,**
**dass** eine Steuereinrichtung zur Regelung der Dicke und zur Vergleichmäßigung des in der zweiten Flotationskammer abgelagerten Sediments mittels verstellbarer Strömungsklappen (32) und Sensoren (11) vorgesehen ist und
**dass** eine Einrichtung zur Änderung des Neigungswinkels eines Siebbodens (1') des zweiten Flottaktionsbecken (27') vorgesehen ist.

## Claims

1. A method for separating a mixture of plastics of different densities and materials heavier than plastics by flotation in the pure water bath of a flotation tank (27), comprising the steps of:
separating, in a first level, materials heavier than plastic which, due to their weight, settle on a sieve bottom (1) which is mounted in the flotation tank so as to be horizontally displaceable,
transferring the plastics still in the suspended state to a second level in which plastics of different density are separated, **characterised by**
slowly moving the sieve bottom of the first level to a first end position, to reduce a gap (7) between the sieve bottom and a wall (26) of the flotation tank (27) and then accelerating the sieve bottom to the other end position and abruptly stopping when the other end position is reached, and
repeating the movement of the sieve bottom at intervals to clean the sieve bottom.

2. An apparatus for separating a mixture of plastics of different densities and materials heavier than plastics by flotation in pure water baths, including:
a first flotation tank (27) having a sieve bottom (1) for depositing materials (8) heavier than plastic, the sieve bottom being horizontally movably supported with respect to a wall (26) of the first flotation tank,
a servo device for moving the sieve bottom
a second flotation tank (27') for separating plastics of different density of the plastics transferred from the first flotation tank and still in the suspended state; and
a control means (14) connected to the servo device for controlling the movement of the sieve bottom such that the sieve bottom is slowly moved towards a first end position and thereby reduces a gap (7) between the sieve bottom and a wall (26) of the first flotation tank, that the sieve bottom is subsequently accelerated towards the other end position and abruptly braked upon reaching the other end position, and that the movement of the sieve bottom is repeated at intervals to clean the sieve bottom.

3. The apparatus according to claim 2, **characterised in that** the sieve bottom (1) cooperates with rollers (2) which slide on at least one guide rail (3) which is supported on the outer wall of the flotation tank, and the rollers engage on the sieve bottom (1) via supporting arms (33).

4. The apparatus according to claim 3, **characterised in that** the sieve bottom (1) is suspended on at least one trolley which slides along the guide rail (3) which is arranged centrally above the sieve bottom (1) and which is supported on the walls of the flotation tank by means of supports (34).

5. The apparatus according to one of claims 3 or 4, **characterised in that** the flank (35) of the rollers (2) sliding along the guide rail (3) is convexly curved in order to minimise friction on the guide rail (3).

6. The apparatus according to claims 3 and 4, **characterised in that** the supporting arms (33), which act on the sieve bottom (1), have a flow-promoting, curved profile.

7. The apparatus according to claim 2, **characterised by** a discharge sluice (12) for discharging the materials which have fallen through the gap (7) from the sieve bottom (1) and collected at the bottom of the first flotation tank (27) into a collecting tank (31).

8. The apparatus according to claim 2, **characterised in that** the control device acts on a hydraulic motor (6) which is firmly connected to the wall of the first flotation tank (27) and which contains, in a cylinder (30), a slidingly mounted piston (22) which subdivides the cylinder (30) into two pressure chambers (23;24), which are connected alternately, controlled by the control device (14) via control valves (13), either to a high-pressure line (19) fed by a hydraulic pump (18) or to a pressure-free return flow line (20).

9. The apparatus according to claim 8, **characterised in that** the control device (14) acts on the control valves (13) via a servomotor (15).

10. The apparatus according to claim 8, **characterised in that** a pressure relief valve (16) is built into the high-pressure line (19) for pressure regulation, which limits the maximum pressure in the pressure relief line (19) and produces a return flow to the hydraulic tank (17) via the return flow line (20) when the maximum pressure is reached.

11. The apparatus according to claim 8, **characterised in that** a jerky movement of the sieve bottom (1) is effected by sudden, abrupt reversal of the two pressure chambers (23; 24) from load to relief by connecting the previously unpressurised pressure chamber to the high-pressure line (19) and connecting the pressurised pressure chamber to the return flow line (20).

12. The apparatus according to claim 2, **characterised in that** a control device is provided for regulating the thickness and for equalising the sediment deposited in the second flotation chamber by means of adjustable flow flaps (32) and sensors (11), and
**in that** a device is provided for changing the angle of inclination of a sieve bottom (1') of the second flotation tank (27').

## Revendications

1. Procédé de séparation d'un mélange de matières plastiques de densités et de matériaux différents plus lourds que les matières plastiques par flottation dans le bain d'eau pure d'un réservoir de flottation (27), comprenant les étapes suivantes :
séparer, dans un premier niveau, des matériaux plus lourds que le plastique qui, en raison de leur poids, se déposent sur un fond de tamis (1) qui est monté dans le réservoir de flottation de manière à pouvoir être déplacé horizontalement,
transférer des matières plastiques encore en suspension à un deuxième niveau dans lequel des matières plastiques de densité différente sont séparées, **caractérisé par**
déplacer lentement le fond de tamis du premier niveau jusqu'à une première position finale, pour réduire un espace (7) entre le fond de tamis et une paroi (26) du réservoir de flottation (27), puis accélérer le fond de tamis jusqu'à l'autre position finale et arrêter brusquement lorsque l'autre position finale est atteinte, et
répéter le mouvement du fond de tamis par intervalles pour nettoyer le fond de tamis.

2. Appareil pour séparer un mélange de matières plastiques de densités et de matériaux différents plus lourds que les matières plastiques par flottation dans des bains d'eau pure, comprenant :
un premier réservoir de flottation (27) ayant un fond de tamis (1) pour déposer des matériaux (8) plus lourds que le plastique, le fond de tamis étant supporté de manière mobile horizontalement par rapport à une paroi (26) du premier réservoir de flottation,
un dispositif d'asservissement pour déplacer le fond de tamis
un deuxième réservoir de flottation (27') pour séparer les matières plastiques de densités différentes des matières plastiques transférées du premier réservoir de flottation et encore en suspension; et
un moyen de commande (14) relié au dispositif d'asservissement pour commander le mouvement du fond de tamis de telle sorte que le fond de tamis soit déplacé lentement vers une première position finale et réduise ainsi un espace (7) entre le fond de tamis et une paroi (26) du premier réservoir de flottation, que le fond de tamis soit ensuite accéléré vers l'autre position finale et soit brusquement freiné lorsqu'il atteint l'autre position finale, et que le mouvement du fond de tamis soit répété par intervalles afin de le nettoyer.

3. Dispositif selon la revendication 2, **caractérisé en ce que** le fond de tamis (1) coopère avec des rouleaux (2) qui coulissent sur au moins un rail de guidage (3) qui est soutenu par la paroi extérieure du réservoir de flottation, et les rouleaux s'engagent sur le fond de tamis (1) par des bras de support (33).

4. Dispositif selon la revendication 3, **caractérisé en ce que** le fond de tamis (1) est suspendu à au moins un chariot qui glisse le long du rail de guidage (3) disposé au centre au-dessus du fond de tamis (1) et qui est soutenu par des supports (34) sur les parois du réservoir de flottation.

5. Dispositif selon l'une des revendications 3 ou 4, **caractérisé en ce que** le flanc (35) des rouleaux (2) coulissant le long du rail de guidage (3) est bombé de manière convexe afin de minimiser le frottement sur le rail de guidage (3).

6. Dispositif selon les revendications 3 et 4, **caractérisé en ce que** les bras de support (33) qui sont engagés sur le fond de tamis (1) présentent un profil bombé favorisant l'écoulement.

7. Dispositif selon la revendication 2, **caractérisé par** un canal d'évacuation (12) pour évacuer les matières qui sont tombées du fond de tamis (1) à travers l'espace (7) et qui sont collectées au fond du premier réservoir de flottation (27) dans un réservoir collecteur (31).

8. Dispositif selon la revendication 2, **caractérisé en ce que** le moyen de commande agit sur un moteur hydraulique (6) qui est relié solidement à la paroi du premier réservoir de flottation (27) et qui contient, dans un cylindre (30), un piston (22) monté coulissant, qui subdivise le cylindre (30) en deux chambres de pression (23; 24), qui sont alternativement, contrôlé par le moyen de commande (14) via des valves de commande (13), reliées ou bien à une conduite haute pression (19) alimentée par une pompe hydraulique (18) ou à une conduite de retour sans pression (20).

9. Dispositif selon la revendication 8, **caractérisé en ce que** le moyen de commande (14) agit sur les valves de commande (13) via un servomoteur (15).

10. Dispositif selon la revendication 8, **caractérisé en ce qu'**une soupape de surpression (16) est intégrée dans la conduite haute pression (19) pour la régulation de la pression, qui limite la pression maximale dans la conduite de surpression (19) et produit un retour vers le réservoir hydraulique (17) via la conduite de retour (20) lorsque la pression maximale est atteinte.

11. Dispositif selon la revendication 8, **caractérisé en ce qu'**un mouvement rétrograde du fond de tamis (1) s'effectue par inversion soudaine et brusque des deux chambres de pression (23; 24) de la charge à la décharge en reliant la chambre de pression précédemment non pressurisée à la conduite haute pression (19) et en reliant la chambre sous pression à la conduite retour (20).

12. Dispositif selon la revendication 2, **caractérisé en ce qu'**il est prévu un moyen de commande pour la régulation de l'épaisseur et l'égalisation du sédiment déposé dans la deuxième chambre de flottation au moyen de volets d'écoulement réglables (32) et de capteurs (11), et
**en ce qu'**un moyen est prévu pour modifier l'angle d'inclinaison d'un fond de tamis (1') du deuxième réservoir de flottation (27').
